# EUROPEAN PATENT SPECIFICATION

(11) **EP 1 925 590 B1**
(45) Date of publication and mention of the grant of the patent: **23.03.2011**
(21) Application number: 06782604.0
(22) Date of filing: 10.08.2006
(51) Int. Cl.: C01G 23/00, B32B 9/00, C08J 7/06, C09D 1/00, C08L 101/00

(54) **RESIN BASES WITH A LIGHT-RESISTANT TITANIC ACID COATING FILM**
HARZTRÄGERMATERIALIEN MIT EINEM LICHTECHTEN TITANSÄUREBESCHICHTUNGSFILM
BASES DE RESINE AVEC UN FILM D'ENROBAGE À L'ACIDE DE TITANE RÉSISTANT À LA LUMIÈRE

(30) Priority: 25.08.2005 JP 2005244672
(43) Date of publication of application: 28.05.2008
(73) Proprietor: Otsuka Chemical Co., Ltd., Osaka-shi, Osaka 540-0021 (JP)
(72) Inventor: YAMAMOTO, Minoru, Tokushima-shi, Tokushima 771-0193 (JP); MORI, Hiroyoshi, Tokushima-shi, Tokushima 771-0193 (JP)
(74) Representative: Merkle, Gebhard
(86) International application number: PCT/JP2006/315800
(87) International publication number: WO 2007/023679

(56) References cited:
- JP-A- 2002 088 500
- JP-A- 2002 088 500
- JP-A- 2003 095 789
- JP-A- 2003 260 368
- JP-A- 2006 257 179
- JP-B2- 2 656 778
- JP-B2- 3 249 776

## Description

### TECHNICAL FIELD

The invention relates to resin bases with a titanic acid coating film excellent in the light resistance.

### BACKGROUND ART

In recent years, in order to impart various functions, processes for forming an inorganic film on various bases are proposed. As one measure thereof, in patent literature 1, a flaky titanic acid suspension obtained by acting a basic compound on an acid-processed layered titanate to cause interlayer swelling or delamination, and a titanic acid coating film obtained by coating the flaky titanic acid suspension on a base material such as a resin film or the like and by drying, are disclosed. The titanic acid coating film is very convenient in the coated film forming process and, as described in the patent literature, expected to be effective in antireflection, high dielectric constant, photocatalyst, UV-shielding and heat-ray reflection.

Patent literatures 2 through 4, as will be described below, disclose producing processes of a layered titanate. Furthermore, patent literatures 5 and 6, as will be described below, disclose producing processes of flaky titanic acid suspensions.
Patent literature 1: WO 03/016218
Patent literature 2: Japanese Patent No. 2979132
Patent literature 3: WO 99/11574
Patent literature 4: Japanese Patent No. 3062497
Patent literature 5: Japanese Patent No. 2671949
Patent Literature 6: WO 03/037797

### DISCLOSURE OF THE INVENTION

The present invention intends to provide resin bases with a titanic acid coating film excellent in the light resistance

A light-resistant titanic acid film coating resin base of the invention is characterized in that a light-resistant titanic acid coating film of the invention is formed on a resin substrate as a base material.

A light-resistant titanic acid coating film of the invention is characterized in that the light-resistant titanic acid coating film is formed of a flaky titanic acid obtained by replacing an interlayer of the flaky titanic acid with cesium ions.

A light-resistant titanic acid coating film in a preferable embodiment of the invention is characterized in that it is a light-resistant titanic acid coating film obtained by coating a flaky titanic acid suspension on a base material, followed by drying; and the flaky titanic acid suspension is an aqueous medium suspension of a flaky titanic acid that is obtained by, after a layered titanate is processed with acid and subsequently an organic basic compound is made act thereon to swell or delaminate interlayers, replacing the organic basic compound with cesium ions.

A flaky titanic acid used in the invention is one obtained by replacing an applied organic basic compound with cesium ions. Owing to the processing, the light resistance of the titanic acid coating film is much improved.

The pH of the flaky titanic acid suspension used in the invention is preferably in the range of 6 to 9. When one that has the pH in the range of 6 to 9 is used, the light resistance of a formed titanic acid film may be further improved.

A layered titanate used in the invention is preferably one expressed by a formula AₓM_{y}D_{z}Ti_{2-(y+z)}O₄ [in the formula, A and M each express a monovalent to trivalent metal different from each other and expresses a defective site of Ti. X is a positive actual number satisfying relationship of 0<x<1, and y and z are 0 or positive actual numbers satisfying relationship of 0<y+z<1]. For instance, specifically, a layered titanate expressed by K₀₀₅ ∼ _{0.8}Li_{0.27}Ti_{1.73}O_{3.85 ∼4} can be cited.

### (Advantages of the Invention)

According to the invention, a titanic acid coating film excellent in the light resistance and a titanic acid film coating resin substrate can be obtained.

### BEST MODE FOR CARRYING OUT THE INVENTION

In what follows, the invention will be further detailed.

### <Flaky Titanic Acid Suspension>

A titanic acid coating film of the invention can be obtained by coating a flaky titanic acid suspension on a base material, followed by drying.

The flaky titanic acid suspension used in the invention is obtained, for instance, when, after a layered titanate is processed with an acid to obtain a layered titanic acid, a basic compound having the interlayer swelling action is applied thereon to swell or delaminate interlayers, and the organic basic compound is replaced by cesium ions. A process of obtaining a flaky titanic acid suspension prior to replacing by cesium ions is described in, for instance, patent literatures 1 and 5.

### <Layered Titanate>

A layered titanate that is a raw material is obtained, according to a process disclosed in patent literature 2, by mixing cesium carbonate and titanium dioxide at a molar ratio of 1:5.3, followed by sintering at 800 deg. C, as Cs_{0.7}Ti_{1.83}O₄. Furthermore, when, according to a process disclosed in patent literature 5, potassium carbonate, lithium carbonate and titanium dioxide are mixed at a ratio of K/Li/Ti = 3/1/6.5 (by molar ratio) and pulverized, followed by sintering at 800°C, K_{0.78}Li_{0.27}Ti_{1.73}O₄ is obtained. Still furthermore, when, according to a process disclosed in patent literature 4, with an alkali metal or a halide or sulfate of an alkali metal as a flux, a mixture obtained by mixing so that a weight ratio of flux/raw material may be in the range of 0.1 to 2.0 is sintered at a temperature in the range of 700 to 1200°C, a layered titanate expressed by a formula AₓMy□_{z}Ti_{2-(y+z)}O₄ [in the formula, A and M each express a monovalent to trivalent metal different from each other and □ expresses a defective site of Ti. X is a positive actual number satisfying relationship of 0<X<1, and Y and Z each are 0 or a positive actual number satisfying relationship of 0<Y+Z<1] can be obtained as well. Here, A in the formula is a monovalent to trivalent metal and preferably at least one kind selected from K, Rb and Cs, and M is a monovalent to trivalent metal different from the metal A, preferably, at least one kind selected from Li, Mg, Zn, Cu, Fe, Al, Ga, Mn and Ni. Specific examples thereof include K_{0.8}Li_{0.27}Ti_{1.73}O₄, Rb_{0.75}Ti_{1.75}Li_{0.25}O₄, Cs_{0.70}Li_{0.23}Ti_{1.77}O₄, Ce_{0.70}□_{0.18}Ti_{1.83}O₄, Ce_{0.70}Mg_{0.35}Ti_{1.65}O₄, K_{0.8}Mg_{0.4}Ti_{1.6}O₄, K_{0.8}Ni_{0.4}Ti_{1.6}O₄, K_{0.8}Zn_{0.4}Ti_{1.6}O₄, K_{0.8}Cu_{0.4}Ti_{1.6}O₄, K₀.₈Fe_{0.8}Ti_{1.2}O₄, K_{0.8}Mn_{0.8}Ti_{1.2}O₄, K_{0.76}Li_{0.22}Mg_{0.05}Ti_{1.73}O₄ and K_{0.67}Li_{0.2}A_{10.07}Ti_{1.73}O₄. Furthermore, when, according to a process disclosed in patent literature 6, K_{0.5 ∼ 0.7}Li_{10.27}Ti_{1.73}O_{3.85 ∼ 3.95} obtained by sintering after acid washing of K_{0.8}Li_{0.27}Ti_{1.73}O₄ as well may be used.

### <Layered Titanic Acid>

A layered titanic acid is obtained, for instance, when the layered titanate is processed with acid followed by replacing replaceable metal cations with hydrogen ions or hydronium ions. An acid used in the acid processing is not particularly restricted. Mineral acids such as hydrochloric acid, sulfuric acid, nitric acid, phosphoric acid and boric acid, or organic acids may be used. Kind of the layered titanic acid, kind and concentration of acid and slurry concentration of the layered titanic acid affect on a conversion rate of the metal cations. In general, the lower the acid concentration is and the larger the slurry concentration is, the more abundant a remaining amount of interlayer metal cations is and the more difficult the interlayer delamination is; accordingly, a thickness of delaminated flaky titanic acid after delamination becomes larger. When the metal cations are difficult to remove, as needs arise, the acid processing may be repeated.

### <Flaky Titanic Acid>

A flaky titanic acid suspension prior to replacement with cesium ions is obtained when a basic compound having an interlayer swelling action is made act on the layered titanic acid to swell or delaminate interlayers. Examples of the basic compounds having the interlayer swelling action include primary to tertiary amines and salts thereof, alkanolamines and salts thereof, quaternary ammonium salts, phosphonium salts, and amino acids and salts thereof. Examples of the primary amines include methylamine, ethylamine, n-propylamine, butylamine, pentylamine, hexylamine, octylamine, dodecylamine, stearylamine, 2-ethylhexylamine, 3-methoxypropylamine, 3-ethoxypropylamine and salts thereof. Examples of the secondary amines include diethylamine, dipentylamine, dioctylamine, dibenzilamine, di(2-ethylhexyl)amine, di(3-ethoxypropyl)amine and salts thereof. Examples of tertiary amines include triethylamine, trioctylamine, tri(2-ethylhexyl)amine, tri(3-ethoxypropyl)amine, dipolyoxyethylenedodecylamine and salts thereof. Examples of alcanolamines include ethanolamine, diethanolamine, triethanolamine, isopropanolamine, diisopropanaolamine, triisopropanolamine, N,N-diethylethanolamine, 2-amino-2-methyl-1-propanol and salts thereof. Examples of quaternary ammonium salts include tetramethylammonium hydroxide, tetraethylammonium hydroxide, tetrapropylammonium hydroxide and tetrabutylammonium hydroxide. Examples of quaternary ammonium salts include dodecyltrimethyl ammonium salt, cetyltrimethyl ammonium salt, stearyltrimethyl ammonium salt, benziltrimethyl ammonium salt, benziltributyl ammonium salt, trimethylphenyl ammonium salt, dimethyldistearyl ammonium salt, dimethyldidecyl ammonium salt, dimethylstearylbenzil ammonium salt, dodecylbis(2-hydroxyethyl)methyl ammonium salt, trioctylmethyl ammonium salt and dipolyoxyethylenedodecylmethyl ammonium salt.

Examples of phosphonium salts include organic phosphonium salts such as tetrabutylphosphonium salt, hexadecyltributylphosphonium salt, dodecyltributylphosphonium salt and dodecyltriphenylphosphonium salt. Furthermore, amine acids such as 12-aminododecanoic acid and aminocaproic acid and salts thereof and imines such as polyethylene imine and salts thereof as well can be used.

The basic compounds can be used, depending on the object, singularly or in a combination of at least two kinds thereof. In particular, since single basic compound high in the hydrophobicity cannot sufficiently delaminate, a basic compound high in the hydrophilicity is preferably used together.

In order to make a basic compound having the interlayer swelling action work, to a suspension where acid-processed or hot water-processed layered titanic acid is dispersed in an aqueous medium, under agitation, a basic compound or one obtained by diluting a basic compound by an aqueous medium may well be added. Alternatively, in an aqueous solution of a basic compound, under agitation, the layered titanic acid or a suspension thereof may well be added.

As an aqueous medium or an aqueous solution means water, a water-soluble solvent, or a mixed solvent of water and a water-soluble solvent, or a solution thereof.

Examples of water-soluble solvents include alcohols such as methyl alcohol, ethyl alcohol and isopropyl alcohol, ketones such as acetone, ethers such as tetrahydrofuran and dioxane, nitriles such as acetonitrile and esters such as ethyl acetate and propylene carbonate.

An addition amount of a basic compound is set in the range of 0.3 to 10 equivalents of the ion exchange capacity of a layered titanate and preferably in the range of 0.5 to 2 equivalents thereof. Here, the ion exchange capacity means an amount of exchangeable metal cations, and, when a layered titanate is expressed by, for instance, a formula A_{X}M_{Y}□_{Z}Ti_{2-(Y+Z)}O₄ and valences of A and M, respectively, are expressed by m and n, a value expressed by mx + ny.

### <Flaky Titanic Acid Suspension Replaced By Cesium Ions>

The flaky titanic acid in the invention is a flaky titanic acid that is obtained when, after an organic basic compound is applied to swell or delaminate interlayers, the organic basic compound is replaced by cesium ions in an aqueous medium. By the processing, the light resistance of a titanic acid film is drastically improved. In order to replace the organic basic compound by cesium ions, in an aqueous dispersion of the flaky titanic acid, a water-soluble cesium salt may well be added and agitated for substantially 1 hr. Examples of water-soluble cesium salts include cesium carbonate, cesium chloride, cesium nitrate, cesium acetate, cesium sulfate, cesium fluoride and cesium hydroxide, cesium carbonate being most preferred. An addition amount of a cesium salt is preferably in the range of 0.1 to 1.0 equivalent of the ion exchange capacity of the layered titanate and more preferably in the range of 0.2 to 0.5 equivalents thereof. When the addition amount is less than 0.1 equivalents, an replacement amount of the organic basic compound to cesium ions becomes insufficient. On the other hand, when the addition amount exceeds 1.0 equivalents, a further improvement is not found to result in, in some cases, being uneconomical. Still furthermore, excessive cesium salt and debonded organic basic compound are desirably removed, after treatment, by centrifugal washing and so on. A content of cesium ions in the flaky titanic acid in the invention is, in terms of Cs₂O content, preferably in the range of 10 to 30% by weight and more preferably in the range of 15 to 25% by weight.

An average major axis of the flaky titanic acid is preferably in the range of 1 to 100 µm and more preferably in the range of 10 to 50 µm and an average thickness thereof is preferably in the range of 0.5 nm to 2 µm and more preferably in the range of 1 nm to 1 µm.

The average major axis of the flaky titanic acid, as far as strong shearing force is not applied to agitate in the course of interlayer delamination under the action of a basic compound, maintains substantially the average major axis of the layered titanate that is a raw material.

When the average major axis of the flaky titanic acid is less than 1 µm, a uniform coating film is difficult to form, and when it exceeds 100 µm, a layered titanate that is a raw material becomes difficult to synthesize.

Furthermore, an average thickness of the flaky titanic acid is substantially 0.5 nm when it is delaminated to single layers. When the thickness exceeds 2 µm, a flaky titanic acid suspension cannot maintain a uniform dispersion state; accordingly, the flaky titanic acid may precipitate.

A concentration of a flaky titanic acid suspension is, as a solid concentration of the flaky titanic acid, preferably in the range of 0.01 to 50% by weight and more preferably in the range of 0.1 to 10% by weight. When the concentration is less than 0.01% by weight, because of low viscosity, a coating film is difficult to form, and, when the concentration exceeds 50% by weight, because of high viscosity, handling becomes difficult.

A flaky titanic acid suspension used in the invention, when a basic compound is applied thereon to swell or delaminate interlayers and an organic basic compound is further replaced by cesium ions, generally becomes 6 to 12 in the pH. However, it is more preferred that thus obtained suspension is further washed with water to remove an excessive basic compound or at least one kind of acid selected from phosphoric acids, aqueous carboxylic acid compounds, boric acid and carbon dioxide gas is used to neutralize excessive basic compound to adjust the pH of the flaky titanic acid suspension in the range of 6 to 9. When one of which the pH is in the range of 6 to 9 is used, the light resistance of the formed titanic acid film can be improved. When the pH is less than 6, the flaky titanic acid flocculates to damage the dispersibility. Furthermore, even when an acid such as a mineral acid such as hydrochloric acid or sulfuric acid other than the above-mentioned ones is used to neutralize, similarly, the flaky titanic acid flocculates to damage the dispersibility.

When water is used to wash to remove excessive basic compound, after the flaky titanic acid suspension is centrifuged and a supernatant is split, precipitated concentrated flaky titanic acid dispersion may well be repeated several times to re-dilute with deionized water. The conditions of centrifugation are preferably set at 5000 to 20000 rpm and 5 min to 1 hr.

Furthermore, when the excessive basic compound is neutralized, at least one kind of acid selected from phosphoric acids, aqueous carboxylic acid compounds, boric acid and carbon dioxide gas may be used. Examples of phosphoric acids include orthophosphoric acid, pyrophosphoric acid, metaphosphoric acid, polyphosphoric acid and the like. Examples of aqueous carboxylic acid compounds include formic acid, acetic acid, propionic acid, oxalic acid, malonic acid, glycolic acid, lactic acid, malic acid and so on.

When the excessive basic compound is neutralized, under agitation of the flaky titanic acid suspension, at least one kind of acid selected from the above group or an aqueous solution thereof is added or carbon dioxide is bubbled. Furthermore, a generated neutralized salt of the basic compound is preferably removed by applying the centrifugal washing.

### <Resin Substrate>

As a base material used in the invention, resin films can be used. From the viewpoint of advantages expected on a titanic acid coating film, a resin substrate is particularly preferred. The resin substrate is not particularly restricted. Specific examples of the resin substrates include single resins such as a polyolefin-based resin, an acrylic resin, a polyamide-based resin, a polyurethane-based resin, a polyester-based resin, a polyacetal-based resin, a polystyrene-based resin, a polycarbonate-based resin, a silicone-based resin, an epoxy-based resin, a melamine-based resin, a cellulose-based resin, a polyvinyl alcohol-based resin, a urea-based resin, a phenol-based resin, a fluorine-based resin and a polybutadiene-based resin and composite-based resins thereof.

### <Formation of Titanic Acid Film>

When a titanic acid film of the invention is formed, general processes such as a roll coating process, a gravure coating process, a knife coating process, a dip coating process or a spray coating process may be used.

A film thickness of a titanic acid film is preferably in the range of 0.01 to 100 µm and more preferably in the range of 0.1 to 20 µm. When the film thickness is less than 0.01 µm, in some cases, expected advantages cannot be obtained. On the other hand, when the film thickness exceeds 100 µm, it takes a long time to dry to be economically unfavorable.

A drying temperature depends on a film thickness. However, the drying temperature is preferably 60°C or more and more preferably 80°C or more. When the drying temperature is less than 60°C, in some cases, insufficient drying may be caused. As to the upper limit of the drying temperature, as far as the drying temperature is less than a decomposition temperature or a softening temperature of a base material, there is no restriction thereon.

Furthermore, within a range that does not damage the object, a polymer, a dispersing agent, a surfactant, an organic or inorganic sol or the like may be added to a flaky titanic acid suspension to form a titanic acid film.

### EXAMPLES

The invention will be specifically explained below with reference to Examples and Comparative Examples, but the invention is not limited in any way to the following examples. All "%" and "part" referred to below are based on the weight unless otherwise specified.

### <Synthesis of Flaky Titanic Acid Suspension>

### (Synthesis Example 1)

A raw material obtained by pulverizing and mixing, in dry, 67.1 g of titanium oxide, 26.78 g of potassium carbonate, 12.04 g of potassium chloride and 5.08 g of lithium hydroxide was sintered at 1020°C for 4 hr. With the obtained powder, 7.9 kg of 10.9% aqueous slurry was prepared, followed by adding 470 g of an aqueous solution of 10% sulfuric acid, agitating for 2 hr and adjusting the pH of the slurry to 7.0. One obtained by separating and washing was dried at 110°C and sintered at 600°C for 12 hr. An obtained white powder was layered titanate K_{0.6}Li_{0.27}Ti_{1.73}O_{3.9} and had an average major axis of 15 µm.

Then, 65 g of the layered titanate was dispersed and agitated in 5 kg of 3.5% hydrochloric acid, followed by reacting at 40°C for 2 hr, further followed by suction filtering to separate, followed by washing. A residual amount of K₂O of the obtained layered titanic acid was 2.0% and the exchange rate of metal ions was 94%.

A total amount of the obtained layered titanic acid was dispersed in 1.6 Kg of deionized water, followed by, under agitation, adding a solution of 34.5 g of dimethylethanolamine in deionized water of 0.4 kg, further followed by agitating at 40°C for 12 hr, thereby a flaky titanic acid dispersion having the pH of 9.9 was obtained. The flaky titanic acid dispersion was centrifuged at 10000 rpm for 10 min to adjust the concentration to 5.0% by weight. The obtained flaky titanic acid dispersion, even after standing still for a long time, did not show precipitation of a solid content. A solid content dried at 110°C for 12 hr showed, according to the TG/DTA analysis, a weight loss of 200°C or more of 14.7% by weight, and an interlayer separation due to the XRD analysis was 10.3 Å.

### (Synthesis Example 2)

In the beginning, 200 g of the flaky titanic acid dispersion of the synthesis example 1 was prepared to a concentration of 1.7% by weight with deionized water, followed by, under agitation, adding 120 g of an aqueous solution of 5% by weight cesium carbonate, further followed by agitating at room temperature for 1 hr to replace interlayer ions of flaky titanic acid from dimethyl ethanol ammonium to cesium ions. After a supernatant solution was split by centrifuging at 10000 rpm for 10 min, a precipitated enriched flaky titanic acid dispersion was repeated to re-dilute with deionized water three times to remove excess cesium carbonate and debonded dimethyl ethanol amine together with the supernatant solution, thereby a flaky titanic acid dispersion of which concentration was adjusted to 5.0% by weight and pH was 8.5 was obtained. The obtained flaky titanic acid dispersion, even after standing still for a long time, did not show precipitation of a solid content. A solid content dried at 110°C for 12 hr showed, according to the TG/DTA analysis, a weight loss of 200°C or more of 2.0% by weight, an interlayer separation due to the XRD analysis was 9.3 Å and a content of Cs₂O due to the fluorescent X-ray analysis was 20.5% by weight. The content of Cs₂O was 0.24 equivalents in terms of the ion exchange amount of the layered titanate.

### (Synthesis Example 3)

In the next place, a carbon dioxide gas was bubbled in the flaky titanic acid dispersion of synthesis example 2 to adjust the pH to 7.9, followed by re-centrifuging to prepare the concentration to 5.0% by weight. The obtained flaky titanic acid dispersion, even after standing still for a long time, did not show precipitation of a solid content. A solid content dried at 110°C for 12 hr showed, according to the TG/DTA analysis, a weight loss of 200°C or more of 1.8% by weight, an interlayer separation due to the XRD analysis was 9.3 Å and a content of Cs₂O due to the fluorescent X-ray analysis was 20.2% by weight. The content of Cs₂O was 0.23 equivalents in terms of the ion exchange amount of the layered titanate.

### (Synthesis Example 4)

Except that an organic basic compound is changed to n-propylamine, similarly to synthesis example 1, a flaky titanic acid dispersion having the pH of 11.5 and the concentration of 5.0% by weight was prepared. The obtained flaky titanic acid dispersion, even after standing still for a long time, did not show precipitation of a solid content. A solid content dried at 110°C for 12 hr showed, according to the TG/DTA analysis, a weight loss of 200°C or more of 14.1% by weight, and an interlayer separation due to the XRD analysis was 10.1 Å.

### (Synthesis Example 5)

The flaky titanic acid dispersion of synthesis example 4 was, according to processes similar to that of synthesis examples 2 and 3, was replaced by cesium ions and neutralized by carbon dioxide to prepare a flaky titanic acid dispersion having the pH of 7.7 and the concentration of 5.0% by weight. The obtained flaky titanic acid dispersion, even after standing still for a long time, did not show precipitation of a solid content. A solid content dried at 110°C for 12 hr showed, according to the TG/DTA analysis, a weight loss of 200°C or more of 1.5% by weight, an interlayer separation due to the XRD analysis was 9.3 Å and a content of Cs₂O due to the fluorescent X-ray analysis was 20.4% by weight. The content of Cs₂O was 0.24 equivalents in terms of the ion exchange amount of the layered titanate.

### <Preparation of Titanic Acid Coating Film>

### (Example 1)

The flaky titanic acid dispersion obtained in synthesis example 2 was coated on a PET substrate (75 µm thick) by means of a film applicator, followed by drying at 80°C for 10 min, thereby a titanic acid coating film having a thickness of 2 µm was prepared.

### (Example 2)

With the flaky titanic acid dispersion of synthesis example 3, according to a method similar to example 1, a titanic acid coating film was prepared.

### (Example 3)

With the flaky titanic acid dispersion of synthesis example 5, according to a method similar to example 1, a titanic acid coating film was prepared.

### (Comparative Example 1)

With the flaky titanic acid dispersion of synthesis example 1, according to a method similar to example 1, a titanic acid coating film was prepared.

### (Comparative Example 2)

With the flaky titanic acid dispersion of synthesis example 4, according to a method similar to example 1, a titanic acid coating film was prepared.

### <Evaluation of Light Resistance

Of the titanic acid coating films of examples 1 through 3 and comparative examples 1 and 2, the weather resistance was evaluated according to a test process shown below.

### [Light Resistance]

The titanic acid coating films were subjected to the accelerated light resistance test of 300 hr by use of a due cycle sunshine weather meter WEL-SUN-DC (trade name, produced by Suga Test Instruments Co., Ltd., black panel temperature: 60°C). A color difference variation amount from the beginning (ΔE) was used to evaluate the light resistance. Results are shown in Table 1.

**[Table 1]**

| Titanic Acid Coating Film | ΔE |
|---|---|
| Example 1 | 1.1 |
| Example 2 | 0.5 |
| Example 3 | 1.5 |
| Comparative Example 1 | 5.5 |
| Comparative Example 2 | 10.2 |

Titanic acid coating films of examples 1 through 3, which are formed from flaky titanic acid suspensions where, according to the invention, an organic basic compound was replaced by cesium ions, are found as shown in Table 1 that the light resistance is improved in comparison with that of comparative examples 1 and 2. Furthermore, example 2 that uses a flaky titanic acid dispersion of synthesis example 3 where carbon dioxide gas was bubbled in a flaky titanic acid dispersion to lower the pH is improved in the light resistance compared to example 1. From these, it is found that when the pH of the flaky titanic acid dispersion is lowered, the light resistance is further improved.

## Claims

1. A light-resistant titanic acid film coating resin base, **characterized in that** a light-resistant titanic acid coating film, which is formed from a flaky titanic acid obtained by replacing an interlayer of the flaky titanic acid with a cesium ion, is formed on a resin substrate as a base material.

2. The light-resistant titanic acid film coating resin base of claim 1, wherein the light-resistant titanic acid coating film is obtained by coating a flaky titanic acid suspension on a base material, followed by drying, **characterized in that** the flaky titanic acid suspension is an aqueous medium suspension of a flaky titanic acid that is obtained by, after a layered titanate is processed with acid and subsequently an organic basic compound is made act thereon to swell or delaminate interlayers, replacing the organic basic compound with cesium ions.

3. The light-resistant titanic acid film coating resin base of claim 2, **characterized in that** the pH of the flaky titanic acid suspension is in the range of 6 to 9.

4. The light-resistant titanic acid film coating resin base of claim 2 or 3, **characterized in that** a layered titanate is expressed by a formula AₓM_{y}□_{z}Ti_{2-(y+z)}O₄ [in the formula, A and M each express a monovalent to trivalent metal different from each other and □ expresses a defective site of Ti. X is a positive actual number satisfying relationship of 0<x<1, and y and z are 0 or positive actual numbers satisfying relationship of 0<y+z<1].

5. The light-resistant titanic acid film coating resin base of any one of claims 2 through 4, **characterized in that** the layered titanate is expressed by K_{0.5∼ 0.8}Li_{0.27}Ti_{1.73}O_{3.85∼4}.

## Patentansprüche

1. Harzbasis mit einem lichtbeständigen Titansäurebeschichtungsfilm, **dadurch gekennzeichnet, dass** auf einem Harzsubstrat als ein Basismaterial ein lichtbeständiger Titansäurebeschichtungsfilm gebildet ist, der aus einer plättchenförmigen Titansäure gebildet ist, erhalten durch Austausch einer Zwischenschicht der plättchenförmigen Titansäure mit einem Cäsium-Ion.

2. Harzbasis mit einem lichtbeständigen Titansäurebeschichtungsfilm gemäß Anspruch 1, wobei der lichtbeständige Titansäurebeschichtungsfilm durch Aufbringen einer Suspension plättchenförmiger Titansäure auf ein Basismaterial erhalten wurde, gefolgt von Trocknen, **dadurch gekennzeichnet, dass** die Suspension plättchenförmiger Titansäure eine Suspension einer plättchenförmigen Titansäure in wässrigem Medium ist, die erhalten wurde durch Verarbeiten eines Schichttitanats mit Säure, anschließendem Einwirken einer organischen Basisverbindung darauf, um Zwischenschichten zu quellen oder zu delaminieren, und schließlich Austausch der organischen Basisverbindung mit Cäsium-Ionen.

3. Harzbasis mit einem lichtbeständigen Titansäurebeschichtungfilm gemäß Anspruch 2, **dadurch gekennzeichnet, dass** der pH-Wert der Suspension plättchenförmiger Titansäure im Bereich von 6 bis 9 ist.

4. Harzbasis mit einem lichtbeständigen Titansäurebeschichtungsfilm gemäß Anspruch 2 oder 3, **dadurch gekennzeichnet, dass** ein Schichttitanat durch eine Formel AₓM_{y}□_{z}Ti_{2-(y+z)}O₄ dargestellt ist [wobei A und M in der Formel jeweils ein voneinander unterschiedliches einwertiges bis dreiwertiges Metall darstellen und □ eine Defektstelle von Ti darstellt, x eine positive reelle Zahl ist, die das Verhältnis 0<x<1 erfüllt, und y und z 0 oder positive reelle Zahlen darstellen, die das Verhältnis 0<y+z<1 erfüllen].

5. Harzbasis mit einem lichtbeständigen Titansäurebeschichtungsfilm gemäß einem der Ansprüche 2 bis 4, **dadurch gekennzeichnet, dass** das Schichttitanat durch K_{0.5-0.8}Li_{0.27}Ti_{1.73}O_{3.85-4} dargestellt ist.

## Revendications

1. Support de résine revêtu d'un film d'acide titanique photo-résistant, **caractérisé en ce qu'**un film de revêtement photo-résistant en acide titanique, qui a été formé à partir d'acide titanique lamellaire obtenu par remplacement d'une couche intermédiaire de l'acide titanique lamellaire par des ions de césium, est formé sur un substrat de résine servant de matériau support.

2. Support de résine revêtu d'un film d'acide titanique photo-résistant, conforme à la revendication 1, pour lequel on a obtenu le film de revêtement photo-résistant en acide titanique en étalant sur un matériau support une suspension d'acide titanique lamellaire qu'on a ensuite fait sécher, **caractérisé en ce que** la suspension d'acide titanique lamellaire était une suspension en milieu aqueux d'un acide titanique lamellaire, que l'on avait obtenue en traitant un titanate lamellaire avec un acide, en faisant ensuite agir dessus un composé organique basique pour faire gonfler les couches intermédiaires ou les décoller des autres, et en remplaçant ensuite le composé organique basique par des ions de césium.

3. Support de résine revêtu d'un film d'acide titanique photo-résistant, conforme à la revendication 2, **caractérisé en ce que** le pH de la suspension d'acide titanique lamellaire se situait dans l'intervalle allant de 6 à 9.

4. Support de résine revêtu d'un film d'acide titanique photo-résistant, conforme à la revendication 2 ou 3, **caractérisé en ce que** le titanate lamellaire était représenté par la formule suivante :
AₓM_{y}□_{z}Ti_{2-(y+z)}O₄
dans laquelle formule A et M représentent chacun un métal monovalent à trivalent, ces métaux étant différents l'un de l'autre, et □ représente une lacune de titane, l'indice x est un nombre réel positif vérifiant l'inégalité 0<x<1, et les indices y et z sont des nombres réels positifs ou nuls qui vérifient l'inégalité 0<y+z<1.

5. Support de résine revêtu d'un film d'acide titanique photo-résistant, conforme à l'une des revendications 2 à 4, **caractérisé en ce que** le titanate lamellaire était représenté par la formule suivante :
K_{0,5-0,8}Li_{0,27}Ti_{1,73}O_{3,85-4}.
